Europäisches Patentamt

European Patent Office

Office européen des brevets

(11) Numéro de publication: **0 185 565 B1**

## (12) FASCICULE DE BREVET EUROPEEN

(45) Date de publication du fascicule du brevet:
**22.03.89**

(21) Numéro de dépôt: **85402202.7**

(22) Date de dépôt: **14.11.85**

(51) Int. Cl.⁴: **B 60 G 17/04**

(54) Valve de nivellement destinée à commander le maintien d'un premier élément dans une position déterminée par rapport à un deuxième élément, et application d'une telle valve à une suspension pneumatique à coussin.

(30) Priorité: **16.11.84 FR 8417548**

(43) Date de publication de la demande:
**25.06.86 Bulletin 86/26**

(45) Mention de la délivrance du brevet:
**22.03.89 Bulletin 89/12**

(84) Etats contractants désignés:
**AT BE CH DE GB IT LI LU NL SE**

(56) Documents cités:
**EP-A- 0 075 969**
**DE-A- 2 816 481**
**DE-B- 1 216 712**
**GB-A- 875 692**
**GB-A- 879 299**
**US-A- 3 510 143**

(73) Titulaire: **Forges de Belles Ondes, 8, rue Blanche,**
**F-75009 Paris (FR)**

(72) Inventeur: **Faubeau, Edmond, 1, rue Gaétan Pirou,**
**F-95580 Andilly (FR)**

(74) Mandataire: **Peuscet, Jacques et al, Cabinet**
**Peuscet 68, rue d'Hauteville, F-75010 Paris (FR)**

# Description

L'invention est relative à une valve de nivellement destinée à commander le maintien d'un premier élément dans une position déterminée par rapport à un deuxième élément, les deux éléments pouvant se déplacer l'un par rapport à l'autre et étant liés par des moyens de liaison à fluide sous pression, ladite valve étant du genre de celles qui comprennent d'une part, un corps de valve destiné à être fixé sur l'un des éléments, ce corps de valve étant muni d'un orifice d'arrivée de fluide sous pression, d'un orifice de raccordement aux moyens de liaison à fluide et d'un orifice d'échappement, et, d'autre part, un ensemble distributeur mobile dans le corps de valve, les déplacements de l'ensemble distributeur par rapport au corps de valve étant commandés par les déplacements relatifs des deux éléments de telle sorte que la valve assure soit une admission de fluide sous pression dans les moyens de liaison à fluide, soit une évacuation du fluide vers l'échappement pour ramener les deux éléments, qui se sont déplacés, dans la position relative souhaitée, le corps de valve comportant une chambre intérieure dans laquelle débouche l'orifice de raccordement aux moyens de liaison à fluide, cette chambre pouvant être reliée, par l'ensemble distributeur, soit à l'orifice d'arrivée de fluide sous pression, soit à l'orifice d'échappement, ladite chambre intérieure du corps de valve étant fermée, à chaque extrémité, par un clapet, l'ensemble distributeur comprenant des moyens de commande de déplacement des clapets, chaque clapet comportant une tête de plus fort diamètre que celui d'une queue s'étendant du côté opposé à la chambre, les têtes étant propres à coopérer avec un siège d'étanchéité prévu à chaque extrémité de la chambre.

L'invention concerne, plus particulièrement, mais non exclusivement, les valves de nivellement destinées aux suspensions pneumatiques, notamment à coussin, utilisées en particulier pour les voitures de chemin de fer ou de métropolitain.

Une valve de ce genre est décrite, par exemple, dans DE-A-28 16 481. Cependant, dans un tel dispositif, les clapets étant montés sur la même tige, sont solidaires l'un de l'autre. Il est donc impossible d'effectuer séparément le réglage de l'ouverture de la vanne, d'une part pour la mise à l'échappement et, d'autre part, pour l'envoi d'air sous pression dans les moyens de liaison à air sous pression.

L'invention a pour but, surtout, de rendre les valves de nivellement du genre en question telles qu'elles répondent mieux que jusqu'à présent aux diverses exigences de la pratique et notamment telles que ce réglage puisse être effectué séparément, de manière plus simple et plus précise. On souhaite, également, pouvoir obtenir, pour certaines applications, des courbes de débit à l'admission et à l'échappement, en fonction de la course de l'ensemble distributeur, sensiblement symétriques. On souhaite, enfin, que la valve soit d'une fabrication simple et robuste et d'un montage aisé.

Selon l'invention, une valve de nivellement, destinée à commander le maintien d'un premier élément dans une position déterminée par rapport à un deuxième élément, les deux éléments pouvant se déplacer l'un par rapport à l'autre et étant liés par des moyens de liaison à fluide sous pression, ladite valve étant du genre défini précédemment, la susdite chambre intérieure du corps de valve étant fermée, à chaque extrémité, par un clapet, l'ensemble distributeur comprenant des moyens de commande de déplacement de clapet, est caractérisée par le fait que chaque clapet est commandé indépendamment l'un de l'autre, que chaque tête est située à l'intérieur de la chambre et que les sièges d'étanchéité sont fixes.

Les deux clapets étant indépendants l'un de l'autre, il est ainsi possible de régler les conditions d'ouverture de chaque clapet, notamment la course, indépendamment du réglage de l'autre clapet.

De préférence, les deux clapets ont une portée d'échanchéité circulaire ayant le même diamètre.

Avantageusement, les clapets sont creux et coaxiaux, et les moyens de commande des déplacements des clapets comprennent une tige étant en butée unilatérale, directement ou indirectement, contre chacun des clapets de telle sorte que le déplacement de la tige dans un sens commande l'ouverture d'un clapet et le déplacement de la tige dans l'autre sens commande l'ouverture de l'autre clapet.

La tige peut porter, à une extrémité, une butée réglable, notamment formée par un écrou vissé sur une partie filetée de la tige, propre à venir en appui unilatéral contre l'un des clapets, tandis qu'à son autre extrémité la tige vient en appui unilatéral, contre l'autre clapet, par l'intermédiaire d'un fourreau monté coulissant sur la tige entre une bague ancrée sur cette tige et le clapet, ce fourreau étant lié, de préférence de manière réglable, à un manchon dont les déplacements sont commandés par les déplacements relatifs des deux éléments.

Généralement, les déplacements du manchon sont commandés par un mécanisme à levier articulé sur un axe porté par le corps de valve et muni d'un doigt coopérant avec une rainure portée par le manchon, les mouvements angulaires du levier étant commandés par une tringlerie en fonction de la position relative des deux éléments.

Chaque clapet comporte, de préférence, une tête de plus fort diamètre, située à l'intérieur de la chambre, propre à coopérer avec un siège d'étanchéité prévu à chaque extrémité de la chambre, cette tête étant solidaire d'une queue s'étendant du côté opposé à la chambre.

Avantageusement, la queue du clapet qui commande l'admission de fluide sous pression vers la chambre traverse un bouchon de fermeture suivant une portée circulaire d'étanchéité ayant le même diamètre que la portée d'étanchéité du clapet réalisée au niveau de la tête.

Un ressort compensateur peut être prévu entre les deux clapets et prendre appui à chaque extrémité contre la tête d'un clapet.

Le corps de valve comporte un logement interne cylindrique communiquant, par un trou de diamètre plus faible déterminant un épaulement intérieur, avec une chambre dans laquelle peut coulisser le manchon lié au fourreau traversé par la tige; une première coupelle est prévue pour prendre appui contre ledit épaulement et être traversée par la queue du clapet coopérant avec le susdit fourreau, la face de cette coupelle opposée audit épaulement servant de siège à la tête du clapet; une deuxième coupelle est maintenue écartée axialement de la première par une entretoise cylindrique et munie d'ouvertures de passage; la face de cette deuxième coupelle tournée vers la première coupelle sert de siège pour la tête de l'autre clapet, la susdite chambre étant située entre ces deux coupelles; une autre entretoise de forme générale cylindrique, munie d'ouvertures de passage dans sa paroi, est disposée en appui axialement contre la deuxième coupelle du côté opposé à la chambre, cette entretoise étant solidaire d'un bouchon transversal traversé par la queue du clapet coopérant avec la deuxième coupelle; l'empilage ainsi réalisé dans le logement du corps de valve est bloqué axialement par un manchon vissé dans l'extrémité taraudée du logement.

L'invention concerne également l'application d'une valve de nivellement présentant les caractéristiques définies précédemment à une suspension pneumatique, notamment à coussin, en particulier pour voitures de chemin de fer ou de métropolitain.

L'invention consiste, mises à part les dispositions exposées ci-dessus, en certaines autres dispositions dont il sera plus explicitement question ci-après à propos d'un mode de réalisation particulier décrit en détail avec référence aux dessins ci-annexés, et qui n'est nullement limitatif.

La figure 1, de ces dessins, est une coupe axiale d'une valve de nivellement conforme à l'invention.

La figure 2 est une vue en élévation, avec parties arrachées, de la valve de la figure 1.

La figure 3 est une vue de droite par rapport à la figure 1.

La figure 4 est une coupe suivant IV–IV figure 1.

La figure 5, enfin, est un schéma d'une suspension pneumatique à coussin équipée d'une valve de nivellement.

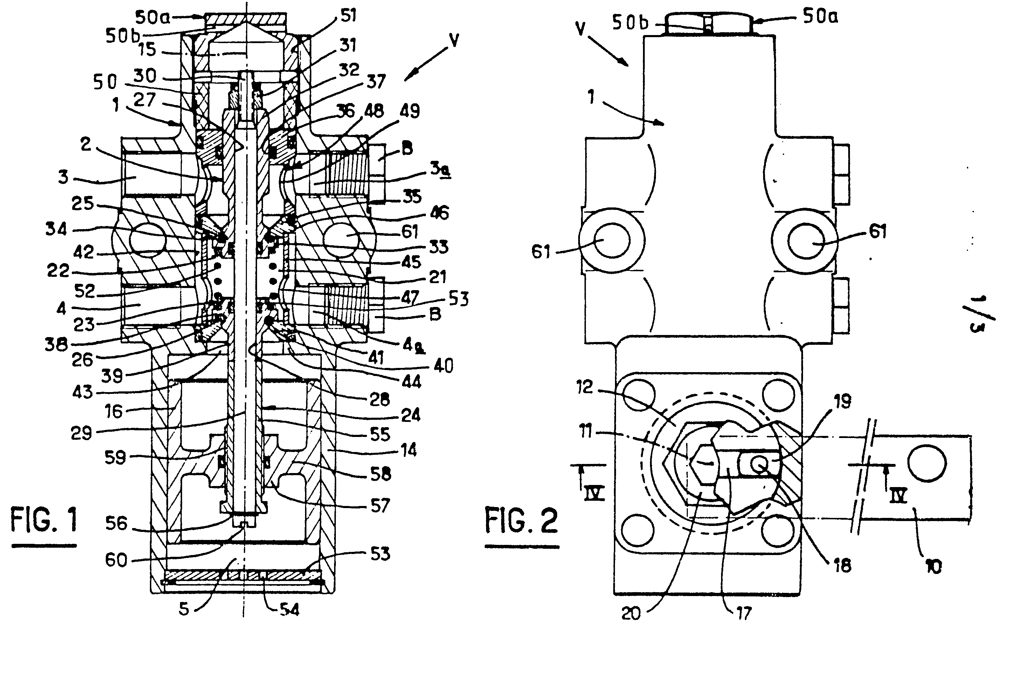

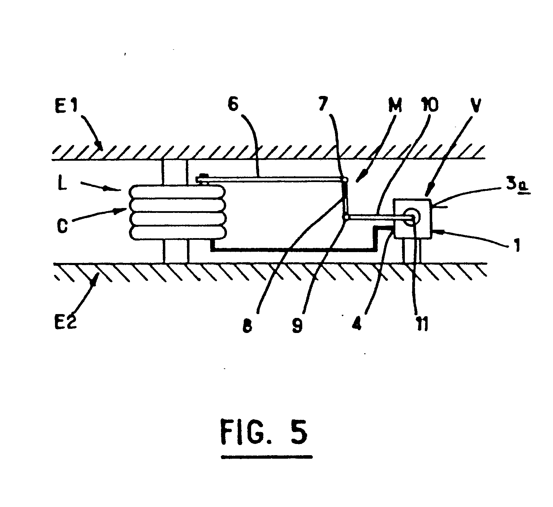

En se reportant aux dessins, notamment aux figures 1 et 5, on peut voir une valve de nivellement V notamment pour suspension pneumatique à coussin C utilisée en particulier sur les voitures de chemin de fer ou de métropolitain. La valve V est destinée à commander le maintien d'un premier élément E1 (figure 5) constitué par la caisse (schématiquement représentée) de la voiture équipée de la suspension pneumatique, par rapport à un deuxième élément E2 (figure 5), schématiquement représenté, constitué par un boggie de la voiture. Les deux éléments E1, E2 peuvent se déplacer l'un par rapport à l'autre, suivant la direction verticale dans l'exemple considéré, et sont liés par des moyens de liaison L à fluide sous pression formés par le coussin C. La paroi transversale supérieure du coussin C est fixée à l'élément E1, tandis que le fond du coussin C est fixé sur l'élément E2.

La valve V comprend, d'une part, un corps de valve 1 destiné à être fixé sur l'un des éléments, à savoir l'élément E2 dans l'exemple de la figure 5, et, d'autre part, un ensemble distributeur 2 (figure 1) mobile dans le corps de valve 1.

Le corps de valve est muni d'un orifice 3 d'arrivée d'air comprimé, d'un orifice 4 de raccordement aux moyens de liaison à fluide L à savoir le coussin C, et d'un orifice d'échappement 5 à l'atmosphère. Il est à noter qu'un orifice 3a, coaxial à l'orifice 3, peut être prévu sur une face opposée du corps du distributeur pour servir d'orifice d'admission du fluide sous pression selon l'implantation souhaitée. Celui des deux orifices 3, 3a qui n'est pas utilisé pour l'arrivée d'air sous pression est fermé par un bouchon fileté B coopérant avec une partie taraudée de l'orifice; dans l'exemple de la figure 1, c'est l'orifice 3a qui est ainsi bouché. De la même manière, un second orifice 4a, associé à l'orifice 4, peut être prévu sur l'autre face du corps 1 pour servir, le cas échéant, au raccordement avec le coussin C. Sur la figure 1, cet orifice 4a, non utilisé, est également fermé par un bouchon B.

Les déplacements de l'ensemble distributeur 1 par rapport au corps de valve 1 sont commandés, grâce à un mécanisme de liaison M (figure 5), par les déplacements relatifs des deux éléments E1, E2, de telle sorte que la valve V assure soit une admission de fluide, généralement d'air, sous pression dans le coussin C, soit une évacuation de l'air vers l'échappement à l'atmosphère, pour ramener les deux éléments E1, E2 qui se sont déplacés dans la position relative souhaitée.

Le mécanisme M schématiquement représenté sur la figure 5 comprend un bras 6 solidaire de la paroi transversale supérieure du coussin C et donc solidaire du premier élément E1; ce bras 6 est articulé à son extrémité 7 éloignée du coussin C sur l'extrémité d'une biellette 8 sensiblement verticale orientée vers le bas. L'extrémité inférieure de la biellette 8 articulée sur l'extrémité d'un levier 10, sensiblement horizontal articulé, à son extrémité, autour d'un axe géométrique 11 (figures 2, 4 et 5) fixe par rapport au corps 1. Cet axe 11, dans l'exemple de réalisation envisagé, constitue l'axe géométrique de rotation d'un manchon 12 monté rotatif dans un logement déterminé par une paroi cylindrique 13 admettant l'axe 11 comme axe géométrique. Cette paroi cylindrique 13 forme une protubérance transversale sur une autre paroi cylindrique 14 dont l'axe géométrique 15 est orthogonal à l'axe 11. Les parois 13 et 14 appartiennent au corps de valve 1 qui admet comme axe général l'axe 15.

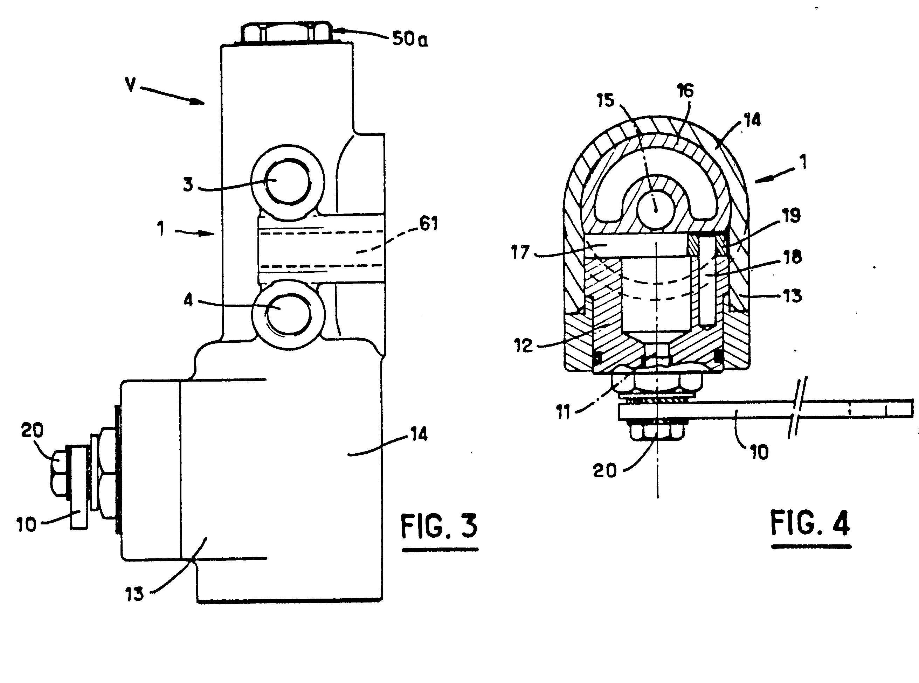

Un manchon 16, lié à l'ensemble distributeur 1 comme expliqué plus loin, est monté coulissant dans la paroi 14, coaxialement à l'axe 15. Ce manchon 16 comporte une rainure transversale 17 (figures 2 et 4) orthogonale aux axes 11 et 15. Le manchon 12 est muni d'un doigt 18 déporté radialement vers l'extérieur par rapport à l'axe 11, ce doigt 18 faisant saillie longitudinalement sur la face d'extrémité intérieure du manchon 12 de manière à pénétrer dans la rainure 17 (figure 4). L'extrémité en saillie du doigt 18 porte un coulisseau 19 s'inscrivant dans la section de la rainure 17. L'extrémité du levier 10 est fixée sur le manchon 12, par exemple à l'aide d'une vis 20.

On comprend immédiatement que les mouvements de rotation du levier 10 autour de l'axe 11, mouvements commandés par les déplacements relatifs des éléments E1, E2 (figure 5), sont transformés en mouvements de translation du manchon 16, parallèlement à laxe 15, grâce à la coopération du coulisseau 19 et de la rainure 17.

Si la charge supportée par l'élément E1 (figure 5) augmente, le coussin C a tendance à s'affaisser; le mouvement relatif de E1 par rapport à E2 provoque un déplacement de l'ensemble distributeur 2 dans un sens qui commande l'envoi de fluide sous pression dans le coussin C jusqu'à ce que l'élément E1 reprenne la position souhaitée. Le phénomène inverse se produit si l'élément E1 est déchargé et a tendance à être soulevé par le coussin C; la pression est alors diminuée automatiquement par la valve 1 dans le coussin C pour maintenir l'élément E1 à la position souhaitée.

Le corps 1, comme visible sur la figure 1, comporte une chambre intérieure 21, coaxiale à l'axe 15, dans laquelle débouche l'orifice 4 (ou 4a) de raccordement au coussin pneumatique C, cette chambre 21 pouvant être reliée, par l'ensemble distributeur 2, soit à l'orifice 3 (ou 3a) d'arrivée de fluide sous pression, soit à l'orifice 5 d'échappement à l'atmosphère.

La chambre 21 est fermée, à chaque extrémité, par un clapet 22, 23, et l'ensemble distributeur 2 comprend des moyens 24 de commande des déplacements de chaque clapet 22, 23, indépendamment de l'autre, selon le sens du mouvement des deux éléments E1, E2 l'un par rapport à l'autre.

Les deux clapets 22, 23 ont une portée d'étanchéité circulaire respectivement 25, 26 ayant le même diamètre.

Les clapets 22, 23 sont creux et coaxiaux. Chaque clapet est traversé, suivant toute sa longueur, par un alésage 27, 28 dans lequel peut coulisser librement, de manière étanche, une tige 29 appartenant aux moyens de commande 24.

La tige 29 est en butée unilatérale, directement ou indirectement, contre chacun des clapets.

Une extrémité 30, l'extrémité supérieure selon la représentation de la figure 1, de la tige 29 est filetée et porte une butée réglable formée par un écrou frein 31 vissé sur cette extrémité 30. Par rotation de l'écrou 31, on peut régler, avec précision, sa position suivant la direction de l'axe de la tige 29, c'est-à-dire suivant la direction de l'axe 15. Cet écrou 31 est propre à venir en appui unilatéral contre le clapet 22, et, plus précisément, contre la face transversale d'extrémité d'une queue 32, en forme de manchon cylindrique, du clapet 22. Cette queue 32 est solidaire de la tête 33, de plus fort diamètre, du clapet 22. La tête 33 est située vers l'intérieur de la chambre 21 et est munie d'un joint torique ou analogue 34 coopérant avec le siège du clapet formé par une face transversale d'une coupelle 35. La queue 32 traverse, de manière étanche, un bouchon 36. Le diamètre de la portée d'étanchéité 37 de la queue 32 à travers le bouchon 36 est égal au diamètre de la portée d'étanchéité 25 du clapet 22. Ce dernier est donc équilibré vis-à-vis de la pression de fluide admise par l'orifice 3. La queue 32 du clapet 22 s'étend du côté opposé à la chambre 21.

L'autre clapet 23 comporte une tête 38, semblable à la tête 33, logée à l'intérieur de la chambre 21 et ayant un diamètre supérieur à celui de la queue 39, solidaire de la tête 38, orientée du côté opposé à la chambre 21. La tête 38 est munie d'un joint torique ou analogue 40 propre à coopérer avec une face transversale, orthogonale à l'axe 15, d'une coupelle 41, semblable à la coupelle 35 et tournée en sens inverse. Les coupelles 35 et 41, du côté opposé à leur face plane orthogonale à l'axe 15, peuvent être limitées par une surface tronconique s'évasant du côté opposé à la chambre 21. Toutes ces pièces sont disposées à l'intérieur d'un logement cylindrique 42, d'axe 15, prévu dans le corps 1, ce logement 42 communiquant, par un trou 43 de plus faible diamètre, avec la chambre limitée par la paroi 14. Un épaulement 44 est ainsi formé dans le fond du logement 42 au niveau du trou 43. La coupelle 41 est en appui axial contre cet épaulement 44. Une douille entretoise cylindrique 45 est prévue entre la coupelle 41 et la coupelle 35 pour les maintenir écartées. Des portées cylindriques 46 sont prévues sur les faces des coupelles 35 et 41 pour s'engager dans la douille 45 et assurer son centrage. La douille 45 est munie d'ouvertures 47 établissant une communication entre le volume intérieur de la douille, et l'extérieur de cette douille.

Le bouchon 36 constitue la paroi transversale supérieure d'une autre douille entretoise 48 qui prend appui axialement contre la coupelle 35 du côté de cette coupelle opposé à la chambre 21. La paroi de la douille 48 est munie d'ouvertures 49 faisant communiquer le volume intérieur de la douille avec le volume extérieur. Cet empilement de pièces est bloqué axialement entre l'épaulement 44 par un manchon fileté 50 vissé dans l'extrémité taraudée 51, s'ouvrant à l'extérieur, du logement 42; l'extrémité frontale du manchon 50 prend appui contre la paroi transversale du bouchon 36. Un bouchon 50a, muni de trous 50b de mise à l'atmosphère, ferme le logement 42.

Un ressort compensateur 52 est prévu entre les deux têtes de clapet 33, 38 et prend appui contre chacune de ces têtes. Une portée cylindrique de centrage 53 est prévue sur chaque tête pour s'engager dans la ou les spires adjacentes du ressort 52 formé par un ressort hélicoïdal travaillant en compression.

Des joints d'étanchéité sont prévus autour du bouchon 36 et des coupelles 35, 41 pour coopérer avec la surface du logement 42.

L'orifice 3 ou 3a débouche dans le logement 42 sensiblement au niveau de la douille 48, entre le bouchon 36 et la coupelle 35. L'orifice 4 ou 4a débouche dans le logement 42 entre les deux coupelles 35, 41.

L'orifice d'échappement 5 est constitué par l'extrémité frontale du logement limité par la paroi 14, cette extrémité étant équipée d'une plaque transversale 53, démontable, munie de trous de passage 54.

La tige 29 se prolonge, au-delà de la queue 39, en direction de la plaque 53. La tige 29 est en appui unilatéral, contre le clapet 23, par l'intermédiaire d'un fourreau 55 monté coulissant sur la tige 29 entre une bague 56 ancrée sur cette tige (ou une butée équivalente) et la queue 39 du clapet 23.

Le fourreau 55 est fixé, de manière réglable, sur le manchon 16 propre à être entraîné en coulissement par le levier 10. Le manchon 16 est muni, sensiblement à mi-longueur, d'une douille 57, de plus faible diamètre, filetée intérieurement et fixée sur le manchon 16 par des bras radiaux 58. Le fourreau 55 comporte, sur sa surface extérieure, une partie filetée 59 propre à être vissée dans la douille 57. Le réglage de la position axiale relative du fourreau 55 par rapport au manchon 16 est obtenu en faisant tourner le fourreau 55 par rapport audit manchon.

L'extrémité de la tige 29 opposée à la partie filetée 30 peut être munie d'une rainure diamétrale 60 permettant d'entraîner en rotation la tige 29 par exemple à l'aide d'un tournevis.

Le corps 1 comporte de part et d'autre du logement 42 des trous 61, d'axes parallèles orthogonaux à l'axe 15, permettant la fixation du corps 1 sur un support.

Il résulte des explications qui précèdent que les deux clapets 22, 23 dont les têtes sont identiques et tournées en sens inverse, peuvent être considérés comme symétriques et identiques par leur comportement vis-à-vis du fluide sous pression.

Ceci étant, le fonctionnement de la valve de nivellement V conforme à l'invention est le suivant.

Si l'élément E1 (figure 5) tend à se rapprocher de l'élément E2 en comprimant le coussin C, le mécanisme M provoque le déplacement du manchon 16 vers la plaque 53 (figure 1), c'est-à-dire vers le bas selon la représentation de la figure 1.

La douille 57 entraîne le fourreau 55, lequel, par son appui contre la bague 56, entraîne la tige 29.

L'écrou 31, entraîné par la tige 29, déplace le clapet 22 du fait que ledit écrou 31 est en butée contre la queue 32. La tête 33 du clapet 22 est ainsi écartée de la coupelle 35 de telle sorte que l'air sous pression qui arrive par leur orifice 3 est admis dans la chambre 21. Cet air sous pression s'écoule, par les ouvertures 47, en direction de l'orifice 4 et du coussin C.

L'air sous pression est admis à une pression supérieure à celle qui peut régner dans le coussin C de telle sorte que ce coussin se dilate et l'élément E1 s'écarte de E2, jusqu'à reprendre la position souhaitée.

Au cours de cette phase, le clapet 23 est resté en appui, par sa tête 38, contre la coupelle 41; le fourreau 55 s'est écarté de la queue 39 sans déplacer le clapet 23.

Le retour du clapet 22 en appui contre la coupelle 35 est assuré par le ressort 52 dont la force a été choisie en conséquence.

Si l'élément E1 a tendance à s'écarter de l'élément E2, le manchon 16 est déplacé par le mécanisme M en direction de la chambre 21. Le fourreau 55 accompagne ce déplacement et pousse la queue 39 du clapet 23. La tête 38 est écartée de la coupelle 41.

Il en résulte que l'air sous pression contenu dans le coussin C peut s'échapper par l'orifice 4 en direction de l'échappement 5 puisque le clapet 23 est ouvert.

Ce mouvement du manchon 16 et, le cas échéant, de la tige 29, est sans effet sur le clapet 22 qui reste fermé.

Lorsque la pression dans le coussin C a suffisamment baissé, l'élément E1 se trouve, par rapport à l'élément E2, dans la position souhaitée et le mécanisme M a ramené le manchon 16 et la tige 29 dans la position neutre.

Le ressort 52 assure le retour du clapet 23 dans sa position de fermeture.

Grâce à la symétrie de fonctionnement des clapets 22, 23 indépendants l'un de l'autre, la courbe du débit de l'air admis et de l'air qui s'échappe, en fonction de la course du manchon 16 et donc de l'angle de rotation du levier 10 autour de l'axe 11 sera relativement symétrique.

La plage neutre de la course du manchon et du levier 10 correspond à la plage de débattement pour laquelle aucun déplacement du clapet 22 ou du clapet 23 n'est commandé. Cette plage dépend du jeu axial extistant, au repos, d'une part entre l'écrou 31 et la queue 32 et, d'autre part, entre le fourreau 5 et la queue 39. Le réglage de ces jeux axiaux et de la plage neutre s'effectue aisément et avec précision par rotation relative d'une part entre l'écrou 31 et la tige 29 et, d'autre part, entre le fourreau 55 et le manchon 16. Ces deux réglages peuvent s'effectuer indépendamment l'un de l'autre.

A titre d'exemple non limitatif, on peut indiquer que dans le cas d'un coussin C prévu pour fonctionner sous une pression de travail normale de 3 bars, l'air comprimé admis dans l'orifice 3 provient d'une source délivrant cet air comprimé sous 8 ou 9 bars.

L'assemblage et le montage de la valve de nivellement s'effectuent d'une manière simple et rapide, notamment grâce à l'empilement des pièces disposées dans le logement 42 et bloquées axialement par le manchon 50 vissé dans l'extrémité taraudée 51 du logement.

**Revendications**

1. Valve de nivellement (V) destinée à commander le maintien d'un premier élément (E1) dans une position déterminée par rapport à un deuxième élément (E2), les deux éléments pouvant se déplacer l'un par rapport à l'autre et étant liés par des moyens de liaison à fluide (L) sous pression, comprenant, d'une part, un corps de valve (1) destiné à être fixé sur l'un des éléments, ce corps de valve étant muni d'un orifice (3) d'arrivée de fluide sous pression, d'un orifice (4) de raccordement aux moyens de liaison à fluide (L) et d'un orifice d'échappement (5) et, d'autre part, un ensemble distributeur (2) mobile dans le corps de valve (1), les déplacements de l'ensemble distributeur (2) par rapport au corps de valve (1) étant commandés par les déplacements relatifs des deux éléments (E1, E2) de telle sorte que la valve (V) assure soit une admission de fluide sous pression dans les moyens de liaison à fluide (L), soit une évacuation du fluide vers l'échappement pour ramener les deux éléments (E1, E2), qui se sont déplacés, dans la position relative souhaitée, le corps (1) de valve comportant une chambre intérieure (21) dans laquelle débouche l'orifice (4, 4a) de raccordement aux moyens de liaison à fluide (L), cette chambre (21) pouvant être reliée, par l'ensemble distributeur (2), soit à l'orifice (3) d'arrivée de fluide sous pression, soit à l'orifice (5) d'échappement, ladite chambre intérieure (21) du corps de valve (1) étant fermée, à chaque extrémité, par un clapet (22, 23), l'ensemble distributeur (2) comprenant des moyens (24) de commande des déplacements des clapets (22, 23), chaque clapet (22, 23) comportant une tête (33, 38) de plus fort diamètre que celui d'une queue (32, 39) s'étendant du côté opposé à la chambre (21), les têtes (33, 38) étant propres à coopérer avec un siège d'étanchéité prévu à chaque extrémité de la chambre (21), caractérisée par le fait que chaque clapet (22, 23) est commandé indépendamment l'un de l'autre, que chaque tête (33, 38) est située à l'intérieur de la chambre (21), et que les sièges d'étanchéité sont fixes.

2. Valve selon la revendication 1, caractérisée par le fait que les deux clapets (22, 23) ont une portée d'étanchéité circulaire (25, 26) ayant même diamètre.

3. Valve selon la revendication 1 ou 2, caractérisée par le fait que les clapets (22, 23) sont creux et coaxiaux et les moyens (24) de commande des déplacements des clapets comprennent une tige (29) montée libre en coulissement dans chaque clapet, cette tige étant en butée unilatérale, directement ou indirectement, contre chacun des clapets (22, 23) de telle sorte que le déplacement de la tige (29) dans un sens commande l'ouverture d'un clapet (22) et le déplacement de la tige dans l'autre sens commande l'ouverture de l'autre clapet (23).

4. Valve selon la revendication 3, caractérisée par le fait que la tige (29) porte, à une extrémité, une butée réglable, notamment formée par un écrou (31) vissé sur une partie filetée (30) de la tige, propre à venir en appui unilatéral contre l'un (22) des clapets, tandis qu'à son autre extrémité, la tige vient en appui unilatéral, contre l'autre clapet (23), par l'intermédiaire d'un fourreau (55) monté coulissant sur la tige (29) entre une bague (56) ancrée sur cette tige et le clapet (23), ce fourreau étant lié, de préférence de manière réglable, à un manchon (16) dont les déplacements sont commandés par les déplacements relatifs des deux éléments.

5. Valve selon l'une quelconque des revendications précédentes, caractérisée par le fait que la queue (32) du clapet (22) qui commande l'admission de fluide sous pression vers la chambre (21) traverse un bouchon de fermeture (36) suivant une portée circulaire (37) d'étanchéité ayant le même diamètre que la portée d'étanchéité (25) du clapet (22) réalisée au niveau de la tête (33).

6. Valve selon l'une quelconque des revendications précédentes, caractérisée par le fait qu'un ressort compensateur (52) est prévu entre les deux clapets (22, 23) et prend appui, à chaque extrémité, contre la tête (33, 38) d'un clapet.

7. Valve selon l'une quelconque des revendications précédentes, caractérisée par le fait que le corps de valve (1) comporte un logement interne (42) cylindrique comminiquant, par un trou (43) de diamètre plus faible déterminant un épaulement intérieur (44), avec une chambre dans laquelle peut coulisser le manchon (16) lié au fourreau (55) traversé par la tige (29); une première coupelle (41) est prévue pour prendre appui contre ledit épaulement et être traversée par la queue (39) du clapet (23) coopérant avec le susdit fourreau (55), la face de cette coupelle (41) opposée audit épaulement (44) servant de siège à la tête du clapet, une deuxième coupelle (35) est maintenue écartée axialement de la première par une entretoise (45) cylindrique et munie d'ouvertures de passage (47); la face de cette deuxième coupelle (35) tournée de l'autre clapet (22), la susdite chambre (21) étant située entre ces deux coupelles (41, 35).

8. Valve selon la revendication 7, caractérisée par le fait qu'une autre entretoise (48) de forme générale cylindrique, munie d'ouvertures de passage (49) dans sa paroi, est disposée en appui axialement contre la deuxième coupelle (35) du côté opposé à la chambre (21), cette entretoise (48) étant solidaire d'un bouchon transversal (36) traversé par la queue (32) du clapet coopérant avec la deuxième coupelle.

9. Application d'une valve de nivellement selon l'une quelconque des revendications précédentes à une suspension pneumatique, notamment à coussin, en particulier pour voitures de chemin de fer ou de métropolitain.

**Patentansprüche**

1. Niveauregelventil (V) zum Konstanthalten der Lage eines ersten Teils (E1) gegenüber einem zweiten Teil (E2), wobei die beiden Teile gegeneinander ortsveränderbar sind und über Verbindungsmittel mit einem unter Druck stehenden Fluid (L) miteinander in Verbindung stehen, mit einerseits einem Ventilkörper (1) zur Befestigung an einem der Teile, welcher eine Einlassöffnung (3) für unter Druck befindliches Fluid, eine Verbindungsöffnung (4) zur Verbindung mit dem Fluid (L) und eine Auslassöffnung (5) aufweist, und mit andererseits einer in dem Ventilkörper (1) befindlichen beweglichen Verteileranordnung (2), deren Ortsveränderungen gegenüber dem Ventilkörper (1) durch die relativen Ortsveränderungen der beiden Teile (E1, E2) derart gesteuert werden, dass das Ventil (V) entweder einen Eintritt von unter Druck befindlichem Fluid in die Verbindung zum Fluid (L) bewirkt, oder ein Ausbringen von Fluid zum Auslass, um die ortsveränderten beiden Teile (E1, E2) in die gewünschte relative Lage zurückzuführen, wobei der Ventilkörper (1) einen Innenraum (21) besitzt, in den die Verbindungsöffnung (4, 4a) zum Fluid (L) einmündet, und welcher durch die Verteileranordnung (2) entweder mit der Einlassöffnung (3) für unter Druck befindliches Fluid oder mit der Auslassöffnung (5) verbunden werden kann, wobei der Innenraum (21) des Ventilkörpers (1) an beiden Enden durch je eine Schliesseinrichtung (22, 23) abschliessbar ist und die Verteileranordnung (2) Mittel (24) zur Steuerung der Ortsveränderungen der Schliesseinrichtungen (22, 23) aufweist und jede der Schliesseinrichtungen (22, 23) aufweist und jede der Schliesseinrichtungen (22, 23) einen Kopf (33, 38) von grösserem Durchmesser als dem eines Endstücks (32, 39) besitzt, das sich von der der Kammer (21) gegenüberliegenden Seite erstreckt, und wobei die Köpfe (33, 38) mit einem Dichtsitz an jedem Ende der Kammer (21) zusammenwirken, dadurch gekennzeichnet, dass jede der Schliesseinrichtungen (22, 23) unabhängig von der anderen betätigbar ist, dass jeder der Köpfe (33, 38) innerhalb der Kammer (21) angeordnet ist, und dass die Dichtsitze fest sind.

2. Ventil nach Anspruch 1, dadurch gekennzeichnet, dass die beiden Schliesseinrichtungen (22, 23) je einen kreisförmigen Dichtbereich (25, 26) von gleichem Durchmesser aufweisen.

3. Ventil nach Anspruch 1 oder 2, dadurch gekennzeichnet, dass die Schliesseinrichtungen (22, 23) Innenaussparungen aufweisen und koaxial angeordnet sind, und dass die Mittel (24) zur Steuerung der Ortsveränderungen der Schliesseinrichtungen eine Stange (29) enthalten, welche frei verschiebbar in jeder der Schliesseinrichtungen angeordnet ist, wobei die Stange unmittelbar oder mittelbar derart an jeder der Schliesseinrichtungen (22, 23) einseitig anstösst, dass die Ortsveränderung der Stange (29) in einer Richtung die Öffnung einer Schliesseinrichtung (22) und die Ortsveränderung der Stange in der anderen Richtung die Öffnung der anderen Schliesseinrichtung (23) bewirkt.

4. Ventil nach Anspruch 3, dadurch gekennzeichnet, dass die Stange (29) an einem Ende einen einstellbaren Anschlag aufweist, insbesondere eine auf einem Gewindeteil (30) der Stange aufgeschraubte Mutter (31), welche(r) einseitig an einer (22) der Schliesseinrichtungen anliegt, während die Stange am anderen Ende einseitig an der anderen Schliesseinrichtung (23) über eine Hülse (55) anliegt, die auf der Stange (29) zwischen einem mit der Stange verbundenen Ring (56) und der Schliesseinrichtung (23) verschiebbar ist, wobei die Hülse, vorzugsweise einstellbar, mit einem Schiebeteil (16) verbunden ist, dessen Ortsveränderungen von den relativen Ortsveränderungen der beiden Teile gesteuert sind.

5. Ventil nach einem der Ansprüche 1 bis 4, dadurch gekennzeichnet, dass das Endstück (32) der Schliesseinrichtung (22), welche den Zugang von unter Druck stehendem Fluid zur Kammer (21) steuert, durch ein Abschlussstück (36) in einem kreisförmigen Dichtbereich (37) geführt ist, welcher den gleichen Durchmesser wie der Dichtbereich (25) der Schliesseinrichtung (22) in Höhe des Kopfes (33) hat.

6. Ventil nach einem der Ansprüche 1 bis 5, dadurch gekennzeichnet, dass eine Ausgleichsfeder (52) zwischen den beiden Schliesseinrichtungen (22, 23) vorhanden ist und mit jedem Ende an dem Kopf (33, 38) einer Schliesseinrichtung anliegt.

7. Ventil nach einem der Ansprüche 1 bis 6, dadurch gekennzeichnet, dass der Ventilkörper (1) einen zylindrischen Innenraum (42) besitzt, welcher über einen eine Innenschulter (44) bildenden Durchgang (43) geringeren Durchmessers mit einer Kammer in Verbindung steht, in der das Schiebeteil (16) hin- und herbewegbar ist, das mit der Hülse (55) verbunden ist, welche die Stange (29) umgibt; ein erstes Ringteil (41) liegt an der Innenschulter an und umgibt das Endstück (39) der Schliesseinrichtung (23), welche mit der Hülse (55) zusammenwirkt, und die Fläche des Ringteils (41), die der Schulter (44) entgegengesetzt angeordnet ist, dient als Sitz für den Kopf der Schliesseinrichtung, wobei ein zweites Ringteil (35) axial im Abstand von dem ersten durch ein zylindrisches Rohrteil (45) gehalten wird und Durchgangsöffnungen (47) vorhanden sind; die Fläche des zweiten Ringteils (35), die dem ersten Ringteil (41) zugewandt ist, dient als Sitz für den Kopf der anderen Schliesseinrichtung, und die Kammer (21) befindet sich zwischen den beiden Ringteilen (41, 35).

8. Ventil nach Anspruch 7, dadurch gekennzeichnet, dass ein anderes, im wesentlichen zylindrisches Rohrteil (48) Durchgangsöffnungen (49) in seiner Wandung besitzt und axial an dem zweiten Ringteil (35) auf der der Kammer (21) entgegengesetzten Seite anstösst, wobei das Rohrteil (48) mit einem Abschlussstück (36) verbunden ist, welches das Endstück (32) der Schliesseinrichtung umgibt, welche mit dem zweiten Ringteil zusammenwirkt.

9. Anwendung eines Niveauregelventils nach einem der Ansprüche 1 bis 8 auf eine pneumatische Federung, namentlich eine Luftkissenfederung, insbesondere für Eisenbahn- und Stadtbahnfahrzeuge.

**Claims**

1. Levelling valve (V) intended to control the holding of a first element (E1) in a predetermined position with respect to a second element (E2), it being possible for the two elements to be displaced with respect to one another and the two elements being linked by pressurized fluid-operated linking means (L), comprising on the one hand a valve body (1) intended to be fixed to one of the elements, this valve body being provided with an orifice (3) for the entry of pressurized fluid, an orifice (4) for joining to the fluid-operated linking means (L) and an outlet orifice (5) and on the other hand a distributor assembly (2) which is movable in the valve body (1), the displacements of the distributor assembly (2) with respect to the valve body (1) being controlled by the relative displacements of the two elements (E1, E2) such that the valve (V) ensures either admission of pressurized fluid into the fluid-operated linking means (L) or evacuation of the fluid towards the outlet in order to bring the two elements (E1, E2) which have been displaced into the desired relative position, the valve body (1) having an inner chamber (21) into which opens the orifice (4, 4a) for joining to the fluid-operated linking means (L), it being possible for this chamber (21) to be connected, by way of the distributor assembly (2), either to the orifice (3) for entry of pressurized fluid or to the outlet orifice (5), the said inner chamber (21) of the valve body (1) being closed at each end by a flap valve (22, 23), the distributor assembly (2) comprising means (24) for controlling the displacements of the flap valves (22, 23), each flap valve (22, 23) having a head (33, 38) of larger diameter than that of a tail (32, 39) which extends on the opposite side of the chamber (21), the heads (33, 38) being suitable for co-operation with a seal seat provided at each end of the chamber (21), characterized in that each flap valve (22, 23) is controlled independently of one another, in that each head (33, 38) is located inside the chamber (21), and in that the seal seats are fixed.

2. Valve according to Claim 1, characterized in that the two flap valves (22, 23) have a circular sealing surface (25, 26) of the same diameter.

3. Valve according to Claim 1 or 2, characterized in that the flap valves (22, 23) are hollow and coaxial and the means (24) for controlling the displacements of the flap valves comprise a rod (29) which is mounted to slide freely in each flap valve, this rod abutting on one side, directly or indirectly, against each of the flap valves (22, 23) such that the displacement of the rod (29) in one direction controls the opening of one flap valve (22) and the displacement of the rod in the other direction controls the opening of the other flap valve (23).

4. Valve according to Claim 3, characterized in that the rod (29) carries at one end a regulable stop, in particular formed from a nut (31) screwed onto a threaded part (30) of the rod and suitable for bearing on one side against one (22) of the flap valves, while at its other end the rod bears on one side against the other flap valve (23) via a bush (55) mounted to slide on the rod (29) between a ring (56) which is anchored on this rod and the flap valve (23), this bush being linked, preferably in regulable manner, to a sleeve (16), the displacements of which are controlled by the relative displacements of the two elements.

5. Valve according to any one of the preceding claims, characterized in that the tail (32) of the flap valve (22) which controls the admission of pressurized fluid to the chamber (21) passes through a closure plug (36) along a circular sealing surface (37) of the same diameter as the sealing surface (25) of the flap valve (22) made at the head (33).

6. Valve according to any one of the preceding claims, characterized in that a compensating spring (52) is provided between the two flap valves (22, 23) and bears at each end against the head (33, 38) of a flap valve.

7. Valve according to any one of the preceding claims, characterized in that the valve body (1) has an internal cylindrical receiver (42) which communicates via a hole (43), of smaller diameter, defining an inner shoulder (44) with a chamber in which the sleeve (16) joined to the bush (55) through which the rod (29) passes can slide; a first cup (41) is provided to bear against the said shoulder and to be passed through by the tail (39) of the flap valve (23), co-operating with the abovementioned bush (55), the face of this cup (41) opposite the said shoulder (44) serving as a seat to the flap valve head, a second cup (35) is held axially away from the first by a cylindrical spacer (45) and is provided with passage openings (47); the face of the second cup (35) which is turned towards the first cup (41) serves as a seat for the head of the other valve (22), the abovementioned chamber (21) being situated between these two cups (41, 35).

8. Valve according to Claim 7, characterized in that another spacer (48), of generally cylindrical shape, which is provided to bear axially against the second cup (35) on the side opposite the chamber (21), this spacer (48) being secured to a transverse plug (36) through which the tail (32) of the flap valve co-operating with the second cup passes.

9. Application of a levelling valve according to any of the preceding claims to an air suspension, especially of the cushion type, in particular for railway or underground railway carriages.

1/3

FIG. 2

FIG. 1

2/3

FIG. 4

FIG. 3

11

3/3

FIG. 5